# EUROPEAN PATENT SPECIFICATION

(11) **EP 4 158 815 B1**
(45) Date of publication and mention of the grant of the patent: **24.06.2026**
(21) Application number: 21817972.9
(22) Date of filing: 27.05.2021
(51) Int. Cl.: H04L 1/00, H04L 1/1829, H04L 1/1607

(54) **RADIO LINK CONTROL LAYER FEEDBACK REPORTING FOR RATELESS CODES**
FEEDBACKMELDUNG AUF FUNKVERBINDUNGSSTEUERUNGSSCHICHT FÜR RATENLOSE CODES
RAPPORT DE RÉTROACTION DE COUCHE DE COMMANDE DE LIAISON RADIO POUR CODES SANS DÉBIT

(30) Priority: 02.06.2020 WO PCT/CN2020/093858
(43) Date of publication of application: 05.04.2023
(73) Proprietor: QUALCOMM INCORPORATED, San Diego, California 92121-1714 (US)
(72) Inventor: WU, Liangming, San Diego, California 92121-1714 (US); XU, Changlong, San Diego, California 92121-1714 (US); LI, Jian, San Diego, California 92121-1714 (US); LIU, Kangqi, San Diego, California 92121-1714 (US); ZHU, Xipeng, San Diego, California 92121-1714 (US); XU, Hao, San Diego, California 92121-1714 (US)
(74) Representative: Reddie & Grose LLP
(86) International application number: PCT/CN2021/096290
(87) International publication number: WO 2021/244380

(56) References cited:
- EP-A1- 3 468 083
- EP-A1- 3 544 366
- EP-A1- 3 557 802
- WO-A1-2016/119415
- CN-A- 110 679 105
- US-A1- 2018 324 637
- NEC CORPORATION: "Services between PDCP and RLC for a split bearer", 3GPP DRAFT; R2-141282_SERVICES BETWEEN PDCP AND RLC FOR A SPLIT BEARER, 21 March 2014 (2014-03-21), Valencia, Spain, pages 1 - 3, XP050817452

## Description

### FIELD OF THE DISCLOSURE

Aspects of the present disclosure generally relate to wireless communication and to techniques and apparatuses for radio link control layer feedback reporting for rateless codes.

### BACKGROUND

Wireless communication systems are widely deployed to provide various telecommunication services such as telephony, video, data, messaging, and broadcasts. Typical wireless communication systems may employ multiple-access technologies capable of supporting communication with multiple users by sharing available system resources (e.g., bandwidth, transmit power, or the like). Examples of such multiple-access technologies include code division multiple access (CDMA) systems, time division multiple access (TDMA) systems, frequency-division multiple access (FDMA) systems, orthogonal frequency-division multiple access (OFDMA) systems, single-carrier frequency-division multiple access (SC-FDMA) systems, time division synchronous code division multiple access (TD-SCDMA) systems, and Long Term Evolution (LTE). LTE/LTE-Advanced is a set of enhancements to the Universal Mobile Telecommunications System (UMTS) mobile standard promulgated by the Third Generation Partnership Project (3GPP).

A wireless network may include a number of base stations (BSs) that can support communication for a number of user equipment (UEs). A UE may communicate with a BS via the downlink and uplink. "Downlink" (or "forward link") refers to the communication link from the BS to the UE, and "uplink" (or "reverse link") refers to the communication link from the UE to the BS. As will be described in more detail herein, a BS may be referred to as a Node B, a gNB, an access point (AP), a radio head, a transmit receive point (TRP), a New Radio (NR) BS, a 5G Node B, or the like.

The above multiple access technologies have been adopted in various telecommunication standards to provide a common protocol that enables different user equipment to communicate on a municipal, national, regional, and even global level. NR, which may also be referred to as 5G, is a set of enhancements to the LTE mobile standard promulgated by the 3GPP. NR is designed to better support mobile broadband Internet access by improving spectral efficiency, lowering costs, improving services, making use of new spectrum, and better integrating with other open standards using orthogonal frequency division multiplexing (OFDM) with a cyclic prefix (CP) (CP-OFDM) on the downlink (DL), using CP-OFDM and/or SC-FDM (e.g., also known as discrete Fourier transform spread OFDM (DFT-s-OFDM)) on the uplink (UL), as well as supporting beamforming, multiple-input multiple-output (MIMO) antenna technology, and carrier aggregation. As the demand for mobile broadband access continues to increase, further improvements in LTE, NR, and other radio access technologies remain useful.
US 2018/324637 relates to reporting an RLC layer status which includes determining whether an RLC status report needs to be transmitted, and if so determining at least one unacknowledged sequence number length selected from a set of unacknowledged sequence number lengths, and generating the report based on the at least one unacknowledged sequence number length.
EP 35578028 also relates to a method for transmitting an RLC layer status report. The method included receiving configuration information that includes at least one control PDU format from which a control PDU format is selected to generate a status report control PDU.

### SUMMARY

The invention is defined in the independent claims, to which the reader is now directed. Preferred or advantageous embodiments are set out in the dependent claims.

### BRIEF DESCRIPTION OF THE DRAWINGS

So that the above-recited features of the present disclosure can be understood in detail, a more particular description, briefly summarized above, may be had by reference to aspects, some of which are illustrated in the appended drawings. It is to be noted, however, that the appended drawings illustrate only certain typical aspects of this disclosure and are therefore not to be considered limiting of its scope, for the description may admit to other equally effective aspects. The same reference numbers in different drawings may identify the same or similar elements.
Fig. 1 is a diagram illustrating an example of a wireless network, in accordance with the present disclosure.
Fig. 2 is a diagram illustrating an example of a base station in communication with a UE in a wireless network, in accordance with the present disclosure.
Fig. 3 illustrates an example logical architecture of a distributed radio access network (RAN), in accordance with the present disclosure.
Fig. 4 illustrates an example physical architecture of a distributed RAN, in accordance with the present disclosure.
Fig. 5 is a diagram illustrating an example of network coding, in accordance with the present disclosure.
Figs. 6A and 6B are diagrams illustrating examples associated with radio link control layer (RLC) feedback reporting for rateless codes, in accordance with the present disclosure.
Figs. 7 and 8 are diagrams illustrating example processes associated with RLC feedback reporting for rateless codes, in accordance with the present disclosure.

### DETAILED DESCRIPTION

Various aspects of the disclosure are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein, one skilled in the art should appreciate that the scope of the disclosure is intended to cover any aspect of the disclosure disclosed herein, whether implemented independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be embodied by one or more elements of a claim.

Several aspects of telecommunication systems will now be presented with reference to various apparatuses and techniques. These apparatuses and techniques will be described in the following detailed description and illustrated in the accompanying drawings by various blocks, modules, components, circuits, steps, processes, algorithms, or the like (collectively referred to as "elements"). These elements may be implemented using hardware, software, or combinations thereof. Whether such elements are implemented as hardware or software depends upon the particular application and design constraints imposed on the overall system.

It should be noted that while aspects may be described herein using terminology commonly associated with a 5G or NR radio access technology (RAT), aspects of the present disclosure can be applied to other RATs, such as a 3G RAT, a 4G RAT, and/or a RAT subsequent to 5G (e.g., 6G).

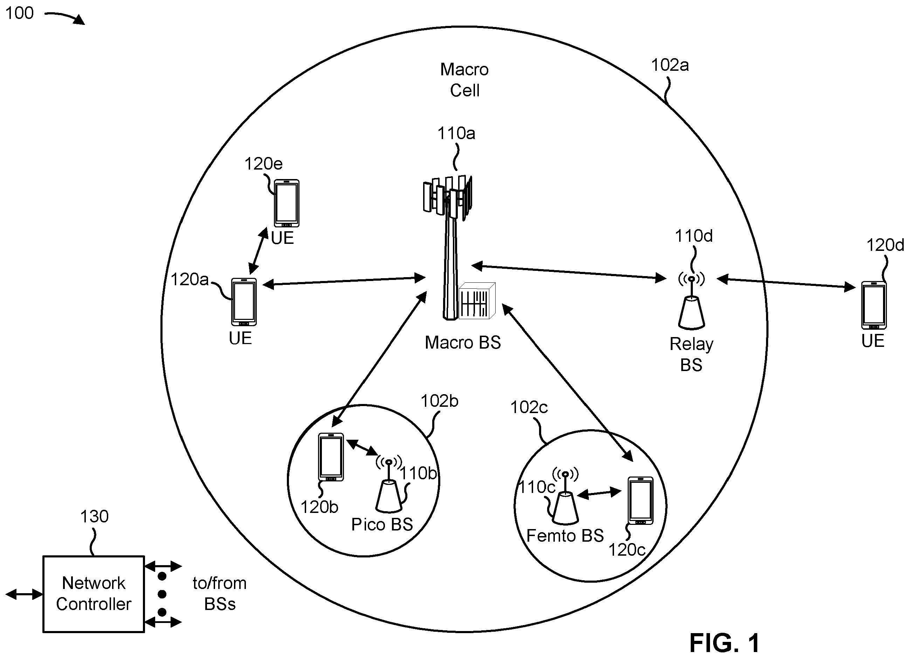

Fig. 1 is a diagram illustrating an example of a wireless network 100, in accordance with the present disclosure. The wireless network 100 may be or may include elements of a 5G (NR) network and/or an LTE network, among other examples. The wireless network 100 may include a number of base stations 110 (shown as BS 110a, BS 110b, BS 110c, and BS 110d) and other network entities. A base station (BS) is an entity that communicates with user equipment (UEs) and may also be referred to as an NR BS, a Node B, a gNB, a 5G node B (NB), an access point, a transmit receive point (TRP), or the like. Each BS may provide communication coverage for a particular geographic area. In 3GPP, the term "cell" can refer to a coverage area of a BS and/or a BS subsystem serving this coverage area, depending on the context in which the term is used.

A BS may provide communication coverage for a macro cell, a pico cell, a femto cell, and/or another type of cell. A macro cell may cover a relatively large geographic area (e.g., several kilometers in radius) and may allow unrestricted access by UEs with service subscription. A pico cell may cover a relatively small geographic area and may allow unrestricted access by UEs with service subscription. A femto cell may cover a relatively small geographic area (e.g., a home) and may allow restricted access by UEs having association with the femto cell (e.g., UEs in a closed subscriber group (CSG)). A BS for a macro cell may be referred to as a macro BS. A BS for a pico cell may be referred to as a pico BS. A BS for a femto cell may be referred to as a femto BS or a home BS. In the example shown in Fig. 1, a BS 110a may be a macro BS for a macro cell 102a, a BS 110b may be a pico BS for a pico cell 102b, and a BS 110c may be a femto BS for a femto cell 102c. A BS may support one or multiple (e.g., three) cells. The terms "eNB", "base station", "NR BS", "gNB", "TRP", "AP", "node B", "5G NB", and "cell" may be used interchangeably herein.

In some aspects, a cell may not necessarily be stationary, and the geographic area of the cell may move according to the location of a mobile BS. In some aspects, the BSs may be interconnected to one another and/or to one or more other BSs or network nodes (not shown) in the wireless network 100 through various types of backhaul interfaces, such as a direct physical connection or a virtual network, using any suitable transport network.

Wireless network 100 may also include relay stations. A relay station is an entity that can receive a transmission of data from an upstream station (e.g., a BS or a UE) and send a transmission of the data to a downstream station (e.g., a UE or a BS). A relay station may also be a UE that can relay transmissions for other UEs. In the example shown in Fig. 1, a relay BS 110d may communicate with macro BS 110a and a UE 120d in order to facilitate communication between BS 110a and UE 120d. A relay BS may also be referred to as a relay station, a relay base station, a relay, or the like.

Wireless network 100 may be a heterogeneous network that includes BSs of different types, such as macro BSs, pico BSs, femto BSs, relay BSs, or the like. These different types of BSs may have different transmit power levels, different coverage areas, and different impacts on interference in wireless network 100. For example, macro BSs may have a high transmit power level (e.g., 5 to 40 watts) whereas pico BSs, femto BSs, and relay BSs may have lower transmit power levels (e.g., 0.1 to 2 watts).

A network controller 130 may couple to a set of BSs and may provide coordination and control for these BSs. Network controller 130 may communicate with the BSs via a backhaul. The BSs may also communicate with one another, directly or indirectly, via a wireless or wireline backhaul.

UEs 120 (e.g., 120a, 120b, 120c) may be dispersed throughout wireless network 100, and each UE may be stationary or mobile. A UE may also be referred to as an access terminal, a terminal, a mobile station, a subscriber unit, a station, or the like. A UE may be a cellular phone (e.g., a smart phone), a personal digital assistant (PDA), a wireless modem, a wireless communication device, a handheld device, a laptop computer, a cordless phone, a wireless local loop (WLL) station, a tablet, a camera, a gaming device, a netbook, a smartbook, an ultrabook, a medical device or equipment, biometric sensors/devices, wearable devices (smart watches, smart clothing, smart glasses, smart wrist bands, smart jewelry (e.g., smart ring, smart bracelet)), an entertainment device (e.g., a music or video device, or a satellite radio), a vehicular component or sensor, smart meters/sensors, industrial manufacturing equipment, a global positioning system device, or any other suitable device that is configured to communicate via a wireless or wired medium.

Some UEs may be considered machine-type communication (MTC) or evolved or enhanced machine-type communication (eMTC) UEs. MTC and eMTC UEs include, for example, robots, drones, remote devices, sensors, meters, monitors, and/or location tags, that may communicate with a base station, another device (e.g., remote device), or some other entity. A wireless node may provide, for example, connectivity for or to a network (e.g., a wide area network such as Internet or a cellular network) via a wired or wireless communication link. Some UEs may be considered Internet-of-Things (IoT) devices, and/or may be implemented as NB-IoT (narrowband internet of things) devices. Some UEs may be considered a Customer Premises Equipment (CPE). UE 120 may be included inside a housing that houses components of UE 120, such as processor components and/or memory components. In some aspects, the processor components and the memory components may be coupled together. For example, the processor components (e.g., one or more processors) and the memory components (e.g., a memory) may be operatively coupled, communicatively coupled, electronically coupled, and/or electrically coupled.

In general, any number of wireless networks may be deployed in a given geographic area. Each wireless network may support a particular RAT and may operate on one or more frequencies. A RAT may also be referred to as a radio technology, an air interface, or the like. A frequency may also be referred to as a carrier, a frequency channel, or the like. Each frequency may support a single RAT in a given geographic area in order to avoid interference between wireless networks of different RATs. In some cases, NR or 5G RAT networks may be deployed.

In some aspects, two or more UEs 120 (e.g., shown as UE 120a and UE 120e) may communicate directly using one or more sidelink channels (e.g., without using a base station 110 as an intermediary to communicate with one another). For example, the UEs 120 may communicate using peer-to-peer (P2P) communications, device-to-device (D2D) communications, a vehicle-to-everything (V2X) protocol (e.g., which may include a vehicle-to-vehicle (V2V) protocol or a vehicle-to-infrastructure (V2I) protocol), and/or a mesh network. In this case, the UE 120 may perform scheduling operations, resource selection operations, and/or other operations described elsewhere herein as being performed by the base station 110.

Devices of wireless network 100 may communicate using the electromagnetic spectrum, which may be subdivided based on frequency or wavelength into various classes, bands, channels, or the like. For example, devices of wireless network 100 may communicate using an operating band having a first frequency range (FR1), which may span from 410 MHz to 7.125 GHz, and/or may communicate using an operating band having a second frequency range (FR2), which may span from 24.25 GHz to 52.6 GHz. The frequencies between FR1 and FR2 are sometimes referred to as mid-band frequencies. Although a portion of FR1 is greater than 6 GHz, FR1 is often referred to as a "sub-6 GHz" band. Similarly, FR2 is often referred to as a "millimeter wave" band despite being different from the extremely high frequency (EHF) band (30 GHz - 300 GHz) which is identified by the International Telecommunications Union (ITU) as a "millimeter wave" band. Thus, unless specifically stated otherwise, it should be understood that the term "sub-6 GHz" or the like, if used herein, may broadly represent frequencies less than 6 GHz, frequencies within FR1, and/or mid-band frequencies (e.g., greater than 7.125 GHz). Similarly, unless specifically stated otherwise, it should be understood that the term "millimeter wave" or the like, if used herein, may broadly represent frequencies within the EHF band, frequencies within FR2, and/or mid-band frequencies (e.g., less than 24.25 GHz). It is contemplated that the frequencies included in FR1 and FR2 may be modified, and techniques described herein are applicable to those modified frequency ranges.

As indicated above, Fig. 1 is provided as an example. Other examples may differ from what is described with regard to Fig. 1.

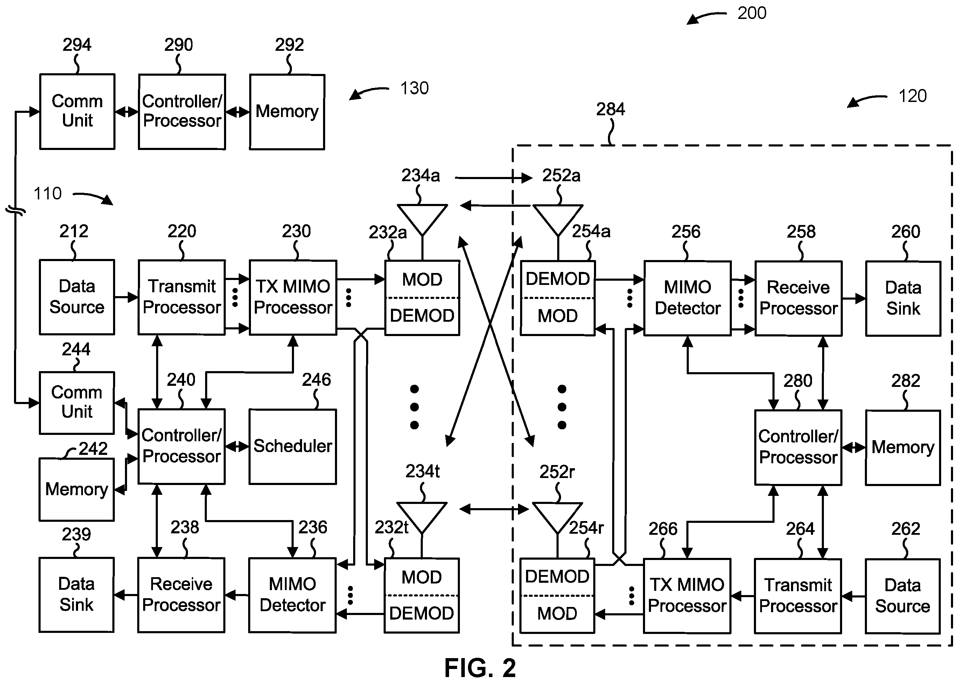

Fig. 2 is a diagram illustrating an example 200 of a base station 110 in communication with a UE 120 in a wireless network 100, in accordance with the present disclosure. Base station 110 may be equipped with T antennas 234a through 234t, and UE 120 may be equipped with R antennas 252a through 252r, where in general T ≥ 1 and R ≥ 1.

At base station 110, a transmit processor 220 may receive data from a data source 212 for one or more UEs, select one or more modulation and coding schemes (MCS) for each UE based at least in part on channel quality indicators (CQIs) received from the UE, process (e.g., encode and modulate) the data for each UE based at least in part on the MCS(s) selected for the UE, and provide data symbols for all UEs. Transmit processor 220 may also process system information (e.g., for semi-static resource partitioning information (SRPI)) and control information (e.g., CQI requests, grants, and/or upper layer signaling) and provide overhead symbols and control symbols. Transmit processor 220 may also generate reference symbols for reference signals (e.g., a cell-specific reference signal (CRS) or a demodulation reference signal (DMRS)) and synchronization signals (e.g., a primary synchronization signal (PSS) or a secondary synchronization signal (SSS)). A transmit (TX) multiple-input multiple-output (MIMO) processor 230 may perform spatial processing (e.g., precoding) on the data symbols, the control symbols, the overhead symbols, and/or the reference symbols, if applicable, and may provide T output symbol streams to T modulators (MODs) 232a through 232t. Each modulator 232 may process a respective output symbol stream (e.g., for OFDM) to obtain an output sample stream. Each modulator 232 may further process (e.g., convert to analog, amplify, filter, and upconvert) the output sample stream to obtain a downlink signal. T downlink signals from modulators 232a through 232t may be transmitted via T antennas 234a through 234t, respectively.

At UE 120, antennas 252a through 252r may receive the downlink signals from base station 110 and/or other base stations and may provide received signals to demodulators (DEMODs) 254a through 254r, respectively. Each demodulator 254 may condition (e.g., filter, amplify, downconvert, and digitize) a received signal to obtain input samples. Each demodulator 254 may further process the input samples (e.g., for OFDM) to obtain received symbols. A MIMO detector 256 may obtain received symbols from all R demodulators 254a through 254r, perform MIMO detection on the received symbols if applicable, and provide detected symbols. A receive processor 258 may process (e.g., demodulate and decode) the detected symbols, provide decoded data for UE 120 to a data sink 260, and provide decoded control information and system information to a controller/processor 280. The term "controller/processor" may refer to one or more controllers, one or more processors, or a combination thereof. A channel processor may determine a reference signal received power (RSRP) parameter, a received signal strength indicator (RSSI) parameter, a reference signal received quality (RSRQ) parameter, and/or a channel quality indicator (CQI) parameter, among other examples. In some aspects, one or more components of UE 120 may be included in a housing 284.

Network controller 130 may include communication unit 294, controller/processor 290, and memory 292. Network controller 130 may include, for example, one or more devices in a core network. Network controller 130 may communicate with base station 110 via communication unit 294.

Antennas (e.g., antennas 234a through 234t and/or antennas 252a through 252r) may include, or may be included within, one or more antenna panels, antenna groups, sets of antenna elements, and/or antenna arrays, among other examples. An antenna panel, an antenna group, a set of antenna elements, and/or an antenna array may include one or more antenna elements. An antenna panel, an antenna group, a set of antenna elements, and/or an antenna array may include a set of coplanar antenna elements and/or a set of non-coplanar antenna elements. An antenna panel, an antenna group, a set of antenna elements, and/or an antenna array may include antenna elements within a single housing and/or antenna elements within multiple housings. An antenna panel, an antenna group, a set of antenna elements, and/or an antenna array may include one or more antenna elements coupled to one or more transmission and/or reception components, such as one or more components of Fig. 2.

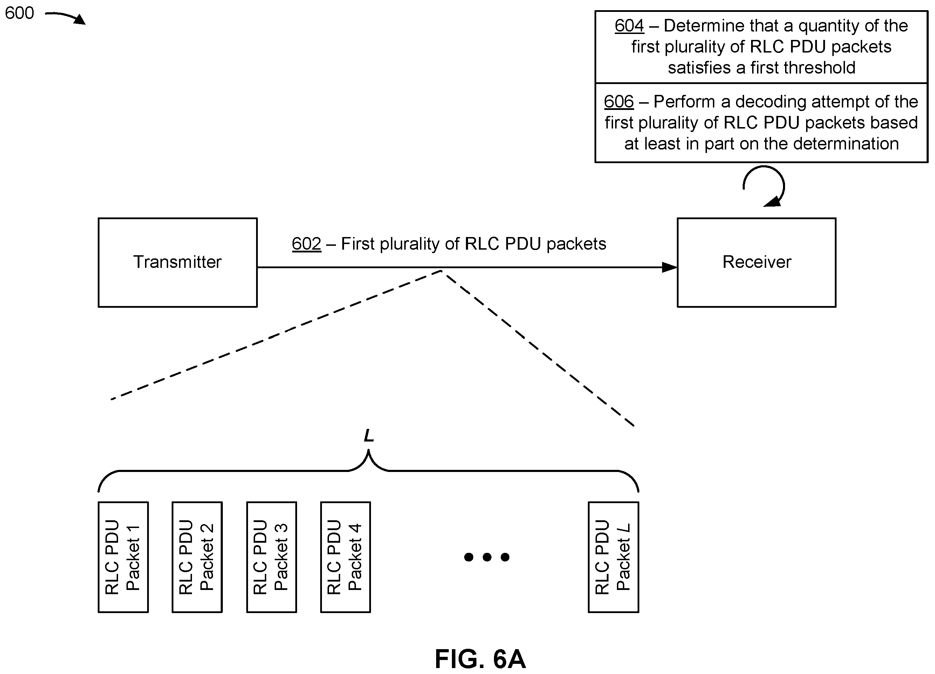

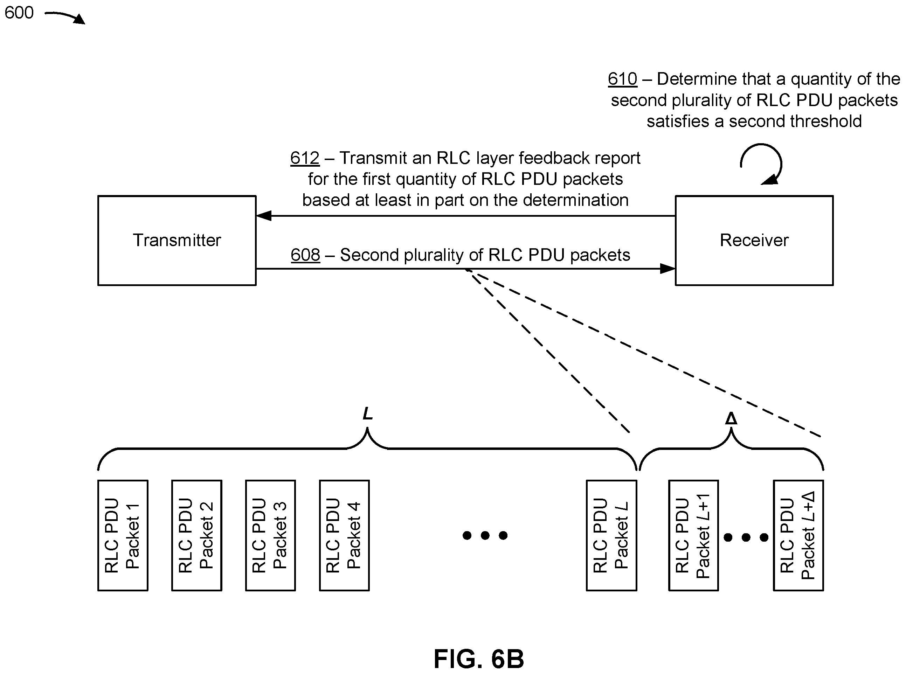

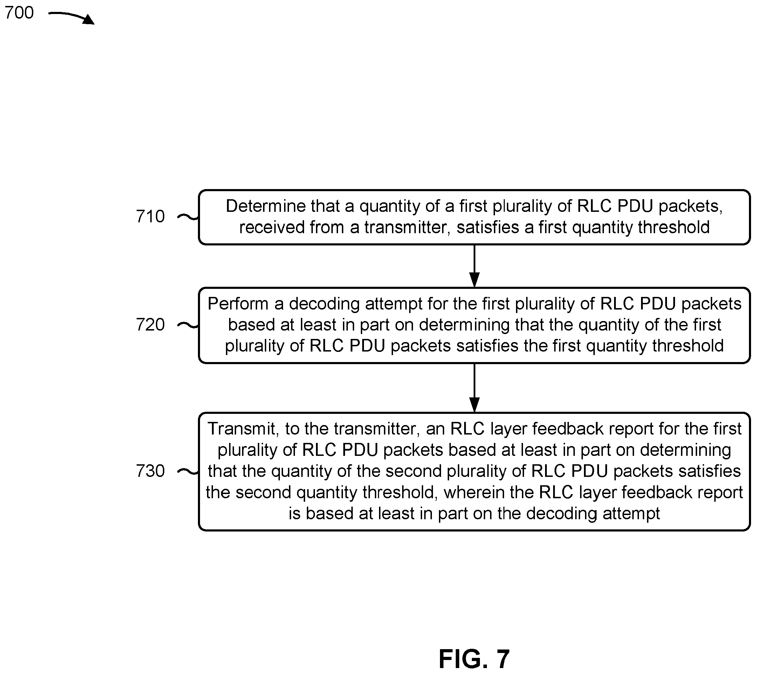

On the uplink, at UE 120, a transmit processor 264 may receive and process data from a data source 262 and control information (e.g., for reports that include RSRP, RSSI, RSRQ, and/or CQI) from controller/processor 280. Transmit processor 264 may also generate reference symbols for one or more reference signals. The symbols from transmit processor 264 may be precoded by a TX MIMO processor 266 if applicable, further processed by modulators 254a through 254r (e.g., for DFT-s-OFDM or CP-OFDM), and transmitted to base station 110. In some aspects, a modulator and a demodulator (e.g., MOD/DEMOD 254) of the UE 120 may be included in a modem of the UE 120. In some aspects, the UE 120 includes a transceiver. The transceiver may include any combination of antenna(s) 252, modulators and/or demodulators 254, MIMO detector 256, receive processor 258, transmit processor 264, and/or TX MIMO processor 266. The transceiver may be used by a processor (e.g., controller/processor 280) and memory 282 to perform aspects of any of the methods described herein (for example, as described with reference to Figs. 6A, 6B, and 7).

At base station 110, the uplink signals from UE 120 and other UEs may be received by antennas 234, processed by demodulators 232, detected by a MIMO detector 236 if applicable, and further processed by a receive processor 238 to obtain decoded data and control information sent by UE 120. Receive processor 238 may provide the decoded data to a data sink 239 and the decoded control information to controller/processor 240. Base station 110 may include communication unit 244 and communicate to network controller 130 via communication unit 244. Base station 110 may include a scheduler 246 to schedule UEs 120 for downlink and/or uplink communications. In some aspects, a modulator and a demodulator (e.g., MOD/DEMOD 232) of the base station 110 may be included in a modem of the base station 110. In some aspects, the base station 110 includes a transceiver. The transceiver may include any combination of antenna(s) 234, modulators and/or demodulators 232, MIMO detector 236, receive processor 238, transmit processor 220, and/or TX MIMO processor 230. The transceiver may be used by a processor (e.g., controller/processor 240) and memory 242 to perform aspects of any of the methods described herein (for example, as described with reference to Figs. 6A, 6B, and 7).

Controller/processor 240 of base station 110, controller/processor 280 of UE 120, and/or any other component(s) of Fig. 2 may perform one or more techniques associated with radio link control (RLC) layer feedback reporting for rateless codes, as described in more detail elsewhere herein. For example, controller/processor 240 of base station 110, controller/processor 280 of UE 120, and/or any other component(s) of Fig. 2 may perform or direct operations of, for example, process 700 of Fig. 7 and/or other processes as described herein. Memories 242 and 282 may store data and program codes for base station 110 and UE 120, respectively. In some aspects, memory 242 and/or memory 282 may include a non-transitory computer-readable medium storing one or more instructions (e.g., code and/or program code) for wireless communication. For example, the one or more instructions, when executed (e.g., directly, or after compiling, converting, and/or interpreting) by one or more processors of the base station 110 and/or the UE 120, may cause the one or more processors, the UE 120, and/or the base station 110 to perform or direct operations of, for example, process 700 of Fig. 7 and/or other processes as described herein. In some aspects, executing instructions may include running the instructions, converting the instructions, compiling the instructions, and/or interpreting the instructions, among other examples.

In some aspects, UE 120 may include means for determining that a quantity of a first plurality of RLC protocol data unit (PDU) packets, received from a transmitter, satisfies a first quantity threshold, means for performing a decoding attempt for the first plurality of RLC PDU packets based at least in part on determining that the quantity of the first plurality of RLC PDU packets satisfies the first quantity threshold, means for transmitting, to the transmitter, an RLC layer feedback report for the first plurality of RLC PDU packets after receiving a second plurality of RLC PDU packets from the transmitter, wherein the second plurality of RLC PDU packets are received after the first plurality of RLC PDU packets, and wherein the RLC layer feedback report is based at least in part on the decoding attempt, and/or the like. In some aspects, such means may include one or more components of UE 120 described in connection with Fig. 2, such as controller/processor 280, transmit processor 264, TX MIMO processor 266, MOD 254, antenna 252, DEMOD 254, MIMO detector 256, receive processor 258, and/or the like.

In some aspects, base station 110 may include means for determining that a quantity of a first plurality of RLC PDU packets, received from a transmitter, satisfies a first quantity threshold, means for performing a decoding attempt for the first plurality of RLC PDU packets based at least in part on determining that the quantity of the first plurality of RLC PDU packets satisfies the first quantity threshold, means for determining that a quantity of a second plurality of RLC PDU packets, received from the transmitter after receiving the first plurality of RLC PDU packets, satisfies a second quantity threshold, means for transmitting, to the transmitter, an RLC layer feedback report for the first plurality of RLC PDU packets based at least in part on determining that the quantity of the second plurality of RLC PDU packets satisfies the second quantity threshold, wherein the RLC layer feedback report is based at least in part on the decoding attempt, and/or the like. In some aspects, such means may include one or more components of base station 110 described in connection with Fig. 2, such as antenna 234, DEMOD 232, MIMO detector 236, receive processor 238, controller/processor 240, transmit processor 220, TX MIMO processor 230, MOD 232, antenna 234, and/or the like.

While blocks in Fig. 2 are illustrated as distinct components, the functions described above with respect to the blocks may be implemented in a single hardware, software, or combination component or in various combinations of components. For example, the functions described with respect to the transmit processor 264, the receive processor 258, and/or the TX MIMO processor 266 may be performed by or under the control of controller/processor 280.

As indicated above, Fig. 2 is provided as an example. Other examples may differ from what is described with regard to Fig. 2.

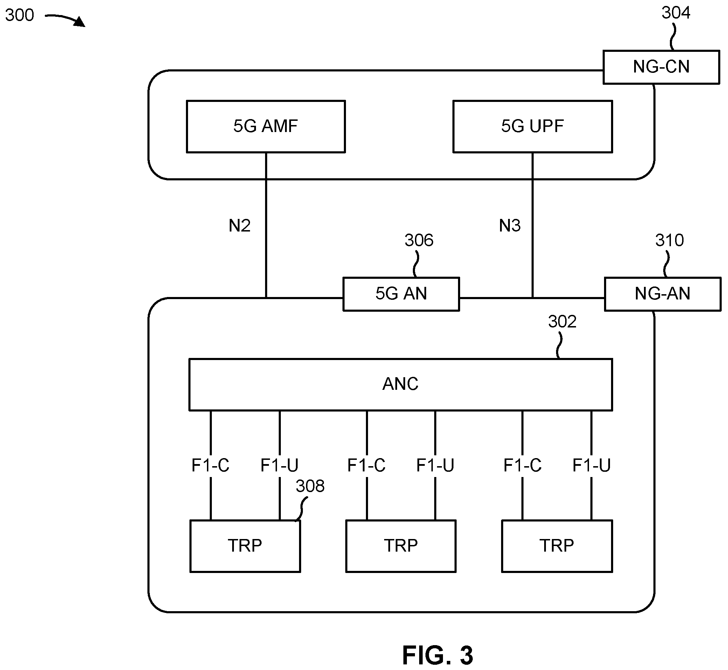

Fig. 3 illustrates an example logical architecture of a distributed RAN 300, according to aspects of the present disclosure. A 5G access node (AN) 306 may include an access node controller (ANC) 302. The ANC may be a central unit (CU) of the distributed RAN 300. The backhaul interface to the next generation core network (NG-CN or NG-Core) 304 may terminate at the ANC. The backhaul interface to neighboring next generation access nodes (NG-ANs) may terminate at the ANC. The ANC may include one or more TRPs 308 (which may also be referred to as BSs, NR BSs, Node Bs, 5G NBs, APs, gNB, or some other term). As described above, "TRP" may be used interchangeably with "cell."

The TRPs 308 may be a distributed unit (DU). The TRPs may be connected to one ANC (ANC 302) or more than one ANC (not illustrated). For example, for RAN sharing, radio as a service (RaaS), and service specific AND deployments, the TRP may be connected to more than one ANC. A TRP may include one or more antenna ports. The TRPs may be configured to individually (e.g., dynamic selection) or jointly (e.g., joint transmission) serve traffic to a UE.

The local architecture of RAN 300 may be used to illustrate fronthaul communication. The architecture may be defined to support fronthauling solutions across different deployment types. For example, the architecture may be based at least in part on transmit network capabilities (e.g., bandwidth, latency, and/or jitter).

The architecture may share features and/or components with LTE. According to aspects, the next generation AN (NG-AN) 310 may support dual connectivity with NR. The NG-AN may share a common fronthaul for LTE and NR.

The architecture may enable cooperation between and among TRPs 308. For example, cooperation may be preset within a TRP and/or across TRPs via the ANC 302. According to aspects, no inter-TRP interface may be needed/present.

According to aspects, a dynamic configuration of split logical functions may be present within the architecture of RAN 300. The packet data convergence protocol (PDCP), RLC, or medium access control (MAC) protocol may be adaptably placed at the ANC or TRP.

According to various aspects, a BS may include a CU (e.g., ANC 302) and/or one or more DUs (e.g., one or more TRPs 308). In some aspects, a BS (e.g., 5G AN 306) may provide, broadcast, multicast, and/or unicast support to one or more UEs 120 via the example distributed RAN 300 illustrated in Fig. 3. For example, a BS may receive a multicast broadcast (MB) quality of service (QoS) flow from a 5G user plane function (UPF) device (e.g., a network controller 130) in NG-CN 304. The BS may receive the MB QoS flow via an N3 user plane interface and over a tunneling protocol (e.g., a general packet radio service (GPRS) Tunneling Protocol or another type of tunneling protocol). The BS may receive the MB QoS flow at a CU (e.g., ANC 302). A 5G access and mobility management function (AMF) device (e.g., a network controller 130) may provide control signaling to the CU over an N2 interface to set up and/or modify the MB QoS flow. The BS may map the MB QoS flow to one or more multicast radio bearers (MRBs) and may provide the MB QoS flow to one or more DUs (e.g., one or more TRPs 308) via the one or more MRBs. The DUs may multicast or broadcast the MB QoS flow to one or more UEs 120.

As indicated above, Fig. 3 is provided as an example. Other examples may differ from what is described with regard to Fig. 3.

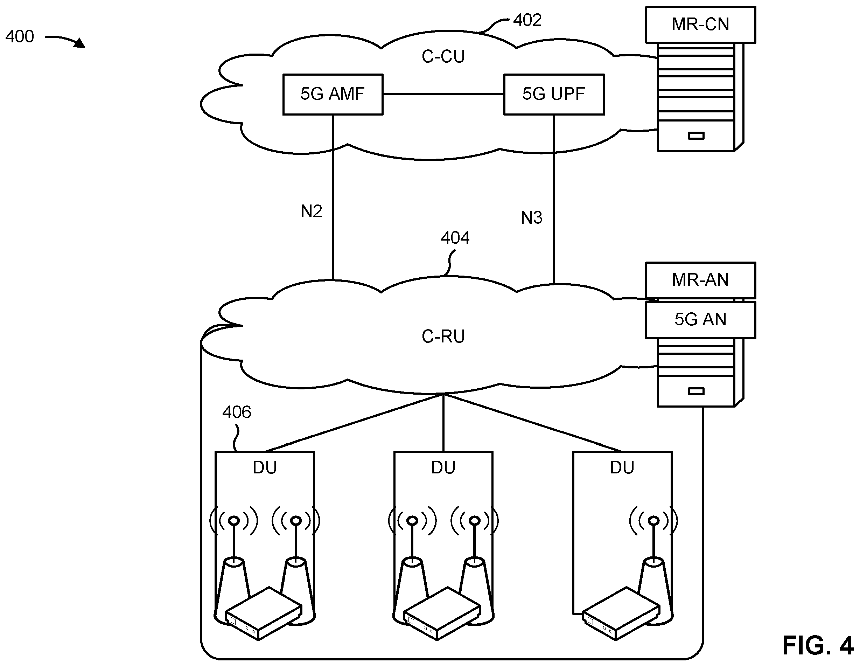

Fig. 4 illustrates an example physical architecture of a distributed RAN 400, according to aspects of the present disclosure. A centralized core network unit (C-CU) 402 may host core network functions, which may be implemented by one or more network controllers 130. The core network functions may include a 5G UPF, a 5G AMF, and/or other core network functions. The C-CU may be centrally deployed. C-CU functionality may be offloaded (e.g., to advanced wireless services (AWS)), in an effort to handle peak capacity.

A centralized RAN unit (C-RU) 404 may host one or more ANC functions. Optionally, the C-RU may host core network functions locally. The C-RU may have distributed deployment. The C-RU may be closer to the network edge. A DU 406 may host one or more TRPs. The DU may be located at edges of the network with radio frequency (RF) functionality.

In some aspects, a BS may provide broadcast, multicast, and/or unicast support to one or more UEs 120 via the example distributed RAN 400 illustrated in Fig. 4. For example, a BS may receive an MB QoS flow from a 5G UPF device (e.g., a network controller 130) of C-CU 402. The BS may receive the MB QoS flow via an N3 user plane interface and over a tunneling protocol (e.g., a GPRS Tunneling Protocol or another type of tunneling protocol). The BS may receive the MB QoS flow at C-RU 404. A 5G AMF device (e.g., a network controller 130) of C-CU 402 may provide control signaling to C-RU 404 over an N2 interface to set up and/or modify the MB QoS flow. The BS may map the MB QoS flow to one or more MRBs and may provide the MB QoS flow to one or more DUs 406 via the one or more MRBs. DUs 406 may multicast or broadcast the MB QoS flow to one or more UEs 120.

As indicated above, Fig. 4 is provided as an example. Other examples may differ from what is described with regard to Fig. 4.

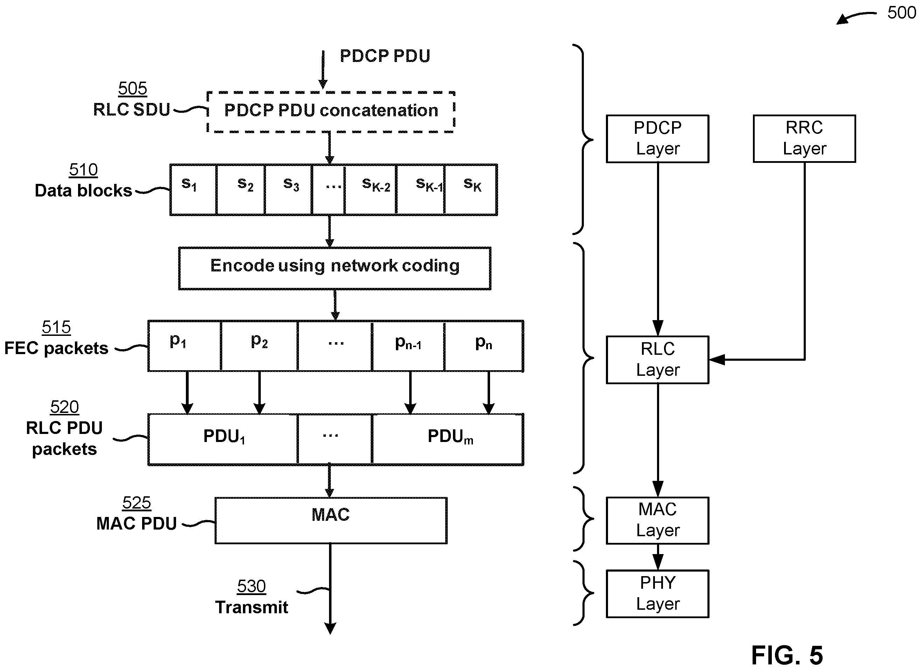

Fig. 5 is a diagram illustrating an example 500 of network coding, in accordance with the present disclosure. The operations described in connection with Fig. 5 may be performed by a transmitter (also referred to as an encoder), such as a UE 120 or a base station 110.

As shown by reference number 505, a transmitter may generate an RLC service data unit (SDU) from one or more PDCP protocol data units (PDUs). In some aspects, a single PDCP PDU may be included in an RLC SDU. In some aspects, multiple PDCP PDUs may be included in an RLC SDU (e.g., by concatenating multiple PDCP PDUs). In some aspects, the transmitter may determine whether to include a single PDCP PDU in a single RLC SDU or whether to concatenate multiple PDCP PDUs in a single RLC SDU based at least in part on a size of the PDCP PDU. For example, if the size of the PDCP PDU satisfies a threshold (e.g., is greater than or equal to the threshold), then the encoder may include only the PDCP PDU (e.g., a single PDCP PDU) in a single RLC SDU. If the size of the PDCP PDU does not satisfy a threshold (e.g., is less than or equal to the threshold), then the encoder may concatenate multiple PDCP PDUs (e.g., a set of PDCP PDUs with a total size that is less than or equal to the threshold) into a single RLC SDU.

As shown by reference number 510, the transmitter may divide the RLC SDU into a plurality of data blocks. For example, the transmitter may divide the RLC SDU into K data blocks, shown as s₁ through s_{K}, based at least in part on the set of network coding parameters. In some aspects, the set of network coding parameters may specify the value of *K* for a particular set of sub-parameters, such as a payload size for the RLC SDU, a size of a sequence number field in an RLC PDU header for the RLC SDU, and/or the like. In some aspects, the encoder may determine the value of *K* for a set of sub-parameters.

In some aspects, the operations associated with reference number 505 and 510 may be performed at the PDCP layer of the transmitter. The PDCP layer may provide the data blocks to the RLC layer of the transmitter. As shown by reference number 515, the transmitter may encode the *K* data blocks into *N* forward error correction (FEC) packets using network coding. For example, the transmitter may encode the K data blocks into the *N* FEC packets, shown as p₁ through p_{N}, based at least in part on a rateless code, such as a network code, a fountain code, a Luby transform (LT) code, a Raptor code, and/or the like. In particular, the transmitter may encode the K data blocks into the *N* FEC packets such that the *N* FEC packets include additional information or bits for purposes of forward error correction. This permits FEC packets to be recovered by a receiver, for example, if the quantity of received FEC packets is larger than the quantity of K data blocks regardless of which FEC packets are received.

In some aspects, the number of RLC packets (e.g., the value of *N*) may be based at least in part on the set of network coding parameters. In some aspects, the set of network coding parameters may specify the value of *N* for a particular set of sub-parameters, a delay budget for the RLC SDU, available encoding and decoding computation resources of the transmitter, the value of *K* (e.g., the quantity of data blocks), a target error probability for one or more RLC PDU packets for the *N* FEC, channel conditions for transmission of the RLC PDU packets(s), the type of network code that is to be used to encode the K data blocks into the *N* FEC packets, and/or the like. In some aspects, the transmitter may determine the value of *N* for a set of sub-parameters.

As shown by reference number 520, the transmitter may map the *N* FEC packets to a corresponding MRLC PDU packets. For example, the transmitter may map *N* FEC packets to *M* RLC PDU packets, shown as PDU₁ through PDU_{M}, such that each RLC PDU includes a plurality of FEC packets (e.g., two FEC packets per RLC PDU packet, four FEC packets per RLC PDU packet, and/or the like). In some aspects, the operations associated with reference number 515 and 520 may be performed at the RLC layer of the transmitter. The RLC layer may receive an indication of the set of network coding parameters from the RRC layer and may perform the operations associated with reference number 515 and 520 based at least in part on the set of network coding parameters.

The RLC layer may provide the *M* RLC PDU packets to the MAC layer of the transmitter. As shown by reference number 525, the transmitter may generate a MAC PDU for the *M* RLC PDU packets. In some aspects, the MAC PDU may include an RLC PDU header or a MAC PDU header, which may include information associated with each of the *M* RLC PDUs. For example, the RLC PDU header or MAC PDU header may include a sequence number field, which may indicate a sequence number associated with each of the *M* RLC PDUs. In some aspects, the operations associated with reference number 525 may be performed at the MAC layer of the transmitter.

The MAC layer of the transmitter may provide the MAC PDU to the physical (PHY) layer of the transmitter. As shown by reference number 530, the encoder may transmit the *M* RLC PDU packets (e.g., in the MAC PDU) to a receiver (also referred to as a decoder), such as a UE 120 or a base station 110. In some aspects, the PHY layer of the transmitter may transmit the *M* RLC PDU packets (e.g., in the MAC PDU) over a wireless physical channel, such as a physical downlink shared channel (PDSCH), a physical downlink control channel (PDCCH), a physical uplink shared channel (PUSCH), a physical uplink control channel (PDCCH), a physical sidelink control channel (PSCCH), a physical sidelink shared channel (PSSCH), and/or the like.

As indicated above, Fig. 5 is provided as an example. Other examples may differ from what is described with respect to Fig. 5.

In some cases, a transmitter and a receiver may implement an automatic repeat request (ARQ) at an RLC layer to increase the reliability and robustness of RLC layer communication between the transmitter and the receiver. In some cases, an ARQ scheme for the RLC layer may include a poll request/status report technique, in which the transmitter transmits a poll request to the receiver and the receiver responds with a status report. The poll request may be transmitted for an RLC window of RLC PDU packets, and the status report may indicate an acknowledgement (ACK) or negative acknowledgement (NACK) for each RLC PDU packet in the RLC window. Each poll request may slide the window forward by a particular quantity of RLC PDU packets. Moreover, each ACK and NACK may indicate a sequence number for an associated RLC PDU packet.

However, the poll request/status report technique may be inefficient in that the transmitter is to stop transmissions of additional RLC PDU packets until a retransmission of a failed RLC PDU packet (e.g., an RLC PDU packet for which a NACK is received) is performed. Moreover, the poll request/status report technique may be inefficient in that the poll request/status report technique does not take advantage of the forward error correction capabilities of rateless codes such as network codes or fountain codes.

The aspects described herein provide techniques and apparatuses for RLC layer feedback reporting for rateless codes. A receiver (e.g., a UE 120, a base station 110, and/or the like) may receive a plurality of RLC PDU packets that each include one or more FEC packets that are encoded using a rateless network code. The receiver is capable of determining when to transmit an RLC layer feedback report of the plurality of packets based at least in part on a quantity of the plurality of RLC PDU packets. In this way, the receiver is capable of transmitting RLC layer feedback for the plurality of RLC PDU packets without having to wait for a polling request from the transmitter, which reduces processing and memory resources of the transmitter, and radio network resources that would otherwise have been consumed on generating and transmitting the polling request. Moreover, the receiver can include various types of RLC layer feedback in the RLC layer feedback report to assist the transmitter in determining which FEC packets to retransmit, to assist the transmitter in determining whether to adjust network coding parameters for subsequent RLC PDU packets, to assist the transmitter in determining whether to transmit additional RLC PDU packets for more robust decoding and forward error correction, and/or the like.

Figs. 6A and 6B are diagrams illustrating one or more examples 600 associated with RLC feedback reporting for rateless codes, in accordance with the present disclosure. As shown in Figs. 6A and 6B, example(s) 600 may include communication between a transmitter and a receiver. The transmitter and the receiver may be included in a wireless network such as wireless network 100. The transmitter and the receiver may respectively be a base station 110 and a UE 120, or vice-versa, that communicate on a wireless access link (which may include an uplink and a downlink), may be a set of UEs 120 that communicate on a wireless sidelink, may be a set of base stations 110 that communicate on a backhaul, or may be another combination of wireless communication devices.

As shown in Fig. 6A, and by reference number 602, the transmitter may transmit a first plurality of RLC PDU packets (e.g., RLC PDU packet 1 through RLC PDU packet *L*) to the receiver. In some aspects, the transmitter is capable of network coding the packets according to the techniques described above in connection with Fig. 5 and/or other network coding techniques. Accordingly, each of the first plurality of RLC PDU packets, or a subset thereof, may be encoded to include one or more FEC packets.

As further shown in Fig. 6A, and by reference number 604, the receiver may receive the first plurality of RLC PDU packets and may determine that a quantity of the first plurality of RLC PDU packets satisfies a first threshold. The first threshold may be a threshold quantity *L* of RLC PDU packets. In some aspects, the receiver may determine the threshold quantity *L* of RLC PDU packets based at least in part on an RLC configuration at an RLC layer of the receiver. In some aspects, the RLC configuration may be configured by an RRC layer of the receiver. In some aspects, the threshold quantity *L* of RLC PDU packets may be programmed at the receiver, may be hardcoded at the receiver, may be defined in a wireless communication standard, a wireless communication specification, and/or the like. In some aspects, the threshold quantity *L* of RLC PDU packets may be signaled to the receiver by the transmitter or another wireless communication device.

In some aspects, the receiver may perform forward error correction across the first plurality of RLC PDU packets. In these cases, the value of L may be configured based at least in part on an expected quantity of RLC PDU packets that permits the receiver to perform forward error correction across the first plurality of RLC PDU packets. An example value for *L* may be 1000 RLC PDU packets. However, other values for *L* may be used, and may be based at least in part on receiver implementation (e.g., the available decoding computation resources of the receiver), channel conditions of the wireless channel on which the transmitter and the receiver communicate, a target error probability for the first plurality of RLC PDU packets, the type of network code that is to encode the FEC packets of the first plurality of RLC PDU packets, and/or the like.

As further shown in Fig. 6A, and by reference number 606, the receiver may perform a decoding attempt of the first plurality of RLC PDU packets. In some aspects, the receiver may perform the decoding attempt of the first plurality of RLC PDU packets based at least in part on determining that the quantity of the first plurality of RLC PDU packets satisfies the first threshold (e.g., the threshold quantity *L* of RLC PDU). In some aspects, the receiver may perform the decoding attempt by attempting to decode each of the first plurality of RLC PDU packets.

In some aspects, the receiver may attempt to decode the first plurality of RLC PDU packets by determining whether the receiver can recover the data blocks of the original RLC SDU that are included in the first plurality of RLC PDU. In some aspects, the receiver may determine if any of the FEC packets in the first plurality of RLC PDU packet are lost or undecodable. If one or more of the FEC packets are lost or undecodable in an RLC PDU packet, the receiver may attempt to recover the data blocks of the lost or undecodable FEC packets by performing forward error correction using other FEC packets in the RLC PDU packet and/or in other RLC PDU packets of the first plurality of RLC PDU packets. In these examples, the receiver may use the additional information or bits encoded in other FEC packets to recreate or infer the data blocks of the lost or undecodable FEC packets.

Alternatively to determining that an *L* quantity of RLC PDU packets has been successfully received, and performing the decoding attempt for the *L* quantity of RLC PDU packets based at least in part on determining that the *L* quantity of RLC PDU packets has been successfully received, the receiver may perform the decoding attempt after receiving an RLC PDU packet having a packet sequence number (SN) greater than *L.* In these aspects, the receiver determines that an RLC PDU packet having a packet SN greater than *L* (e.g., *L*+1 or another packet SN greater than *L*) was received (e.g., from the transmitter), and performs the decoding attempt for RLC PDU packets 1 through *L* that were successfully received based at least in part on determining that an RLC PDU packet having a packet SN greater than *L* was received.

As shown in Fig. 6B, and by reference number 608, the transmitter may transmit a second plurality of RLC PDU packets (e.g., RLC PDU packet *L*+1 through RLC PDU packet *L*+Δ) to the receiver. In some aspects, each of the second plurality of RLC PDU packets, or a subset thereof, may be encoded to include one or more FEC packets using the network coding techniques described above in connection with Fig. 5 and/or other network coding techniques.

As further shown in Fig. 6B, and by reference number 610, the receiver may determine that a quantity of the second plurality of RLC PDU packets satisfies a second threshold. The second threshold may be a threshold quantity Δ of RLC PDU packets received after or subsequent to reception of the threshold quantity *L* of RLC PDU packets. In some aspects, the receiver may determine the threshold quantity Δ of RLC PDU packets based at least in part on an RLC configuration at an RLC layer of the receiver. In some aspects, the RLC configuration may be configured by an RRC layer of the receiver. In some aspects, the threshold quantity Δ of RLC PDU packets may be programmed at the receiver, may be hardcoded at the receiver, may be defined in a wireless communication standard, a wireless communication specification, and/or the like. In some aspects, the threshold quantity Δ of RLC PDU packets may be signaled to the receiver by the transmitter or another wireless communication device.

An example value for Δ may be 6 RLC PDU packets. As another example, the value for Δ may be 0 RLC PDU packets (e.g., the receiver is to transmit an RLC layer feedback report immediately after generating the RLC layer feedback report). However, other values for Δ may be used. In some aspects, the first quantity threshold (*L*) and the second quantity threshold (Δ) may be configured together (e.g., in the same RLC configuration). In some aspects, the first quantity threshold (*L*) and the second quantity threshold (Δ) are correlated. For example, the value for first quantity threshold (*L*) may be based at least in part on the SDU size of the SDU in which the first plurality of RLC PDU packets is included, and the value for the second quantity threshold (Δ) may be based at least in part on the value for the first quantity threshold (*L*).

As further shown in Fig. 6B, and by reference number 612, the receiver may transmit an RLC layer feedback report to the transmitter. In some aspects, the receiver may transmit the RLC layer feedback report based at least in part on determining that the quantity of the second plurality of RLC PDU packets satisfies the second threshold (e.g., the threshold quantity Δ of RLC PDU packets).

The RLC layer feedback report may be for the first plurality of RLC PDU packets and may be based at least in part on the decoding attempt for the first plurality of RLC PDU packets. In some aspects, the RLC layer feedback report may include feedback information associated with the first plurality of RLC PDU packets. For example, the RLC layer feedback report may include information identifying an ACK or a NACK for the first plurality of RLC PDU packets as a whole (e.g., an ACK indicating that the data blocks of the first plurality of RLC PDU packets were decoded and/or recovered, a NACK indicating that one or more RLC PDU packets could not be decoded and/or were not recoverable, and/or the like). As another example, the RLC layer feedback report may include information identifying an ACK or a NACK for each of the first plurality of RLC PDU packets.

As another example, the RLC layer feedback report may include information identifying a quantity of failed RLC PDU packets (e.g., RLC PDU packets that are lost or undecodable), of the first plurality of RLC PDU packets, for the decoding attempt. As another example, the RLC layer feedback report may include information identifying a quantity of failed FEC packets (e.g., FEC packets that are lost or undecodable), included in an RLC PDU packet of the first plurality of RLC PDU packets, for the decoding attempt. As another example, the RLC layer feedback report may include information identifying an index associated with a failed FEC encoded packet, included in an RLC PDU packet of the first plurality of RLC PDU packets, for the decoding attempt.

Alternatively to determining that a Δ quantity of RLC PDU packets has been received after the *L* RLC PDU packets, and transmitting the RLC layer feedback report based at least in part on determining that the Δ quantity of RLC PDU packets has been received after the *L* RLC PDU packets, the receiver may transmit the RLC layer feedback report after receiving an RLC PDU packet having a packet SN greater than a particular packet SN (e.g., which is a higher packet SN than the packet SN associated with the RLC PDU packet based on which the receiver determined to perform the decoding attempt for the *L* RLC PDU packets).

In some aspects, the receiver tracks a counter of RLC PDU packets received by the receiver. The receiver may reset the counter based at least in part on determining that a counter threshold of RLC PDU packets (e.g., of C RLC PDU packets) has been received (e.g., quantity of packet SNs > *C*). The threshold of RLC PLD packets (e.g., *C*) may be configured as an indicator for a maximum length of FEC encoded RLC PDU packets.

In this way, the receiver is capable of transmitting RLC layer feedback for the plurality of RLC PDU packets without having to wait for a polling request from the transmitter, which reduces processing and memory resources of the transmitter, and radio network resources that would otherwise have been consumed on generating and transmitting the polling request. Moreover, the receiver can include various types of RLC layer feedback in the RLC layer feedback report to assist the transmitter in determining which FEC packets to retransmit, to assist the transmitter in determining whether to adjust network coding parameters for subsequent RLC PDU packets, to assist the transmitter in determining whether to transmit additional RLC PDU packets for more robust decoding and forward error correction, and/or the like.

In some aspects, the techniques described in connection with Figs. 6A and 6B may be extended to be implemented at the PDCP layer in a similar manner.

As indicated above, Figs. 6A and 6B are provided as one or more examples. Other examples may differ from what is described with respect to Figs. 6A and 6B.

Fig. 7 is a diagram illustrating an example process 700 performed, for example, by a receiver, in accordance with the present disclosure. Example process 700 is an example where the receiver (e.g., a UE 120, a base station 110, and/or the like) performs operations associated with RLC layer feedback reporting for rateless codes.

As shown in Fig. 7, in some aspects, process 700 may include determining that a quantity of a first plurality of RLC PDU packets, received from a transmitter, satisfies a first quantity threshold (block 710). For example, the receiver (e.g., using transmit processor 200, receive processor 238, controller/processor 240, memory 242, receive processor 258, transmit processor 264, controller/processor 280, memory 282, and/or the like) may determine that a quantity of a first plurality of RLC PDU packets, received from a transmitter, satisfies a first quantity threshold, as described above.

As further shown in Fig. 7, in some aspects, process 700 may include performing a decoding attempt for the first plurality of RLC PDU packets based at least in part on determining that the quantity of the first plurality of RLC PDU packets satisfies the first quantity threshold (block 720). For example, the receiver (e.g., using transmit processor 200, receive processor 238, controller/processor 240, memory 242, receive processor 258, transmit processor 264, controller/processor 280, memory 282, and/or the like) may perform a decoding attempt for the first plurality of RLC PDU packets based at least in part on determining that the quantity of the first plurality of RLC PDU packets satisfies the first quantity threshold, as described above.

As further shown in Fig. 7, in some aspects, process 700 may include transmitting, to the transmitter, an RLC layer feedback report for the first plurality of RLC PDU packets after receiving a second plurality of RLC PDU packets from the transmitter, wherein the second plurality of RLC PDU packets are received after the first plurality of RLC PDU packets, and wherein the RLC layer feedback report is based at least in part on the decoding attempt (block 730). For example, the receiver (e.g., using transmit processor 200, receive processor 238, controller/processor 240, memory 242, receive processor 258, transmit processor 264, controller/processor 280, memory 282, and/or the like) may transmit, to the transmitter, an RLC layer feedback report for the first plurality of RLC PDU packets after receiving a second plurality of RLC PDU packets from the transmitter, as described above. In some aspects, the second plurality of RLC PDU packets are received after the first plurality of RLC PDU packets. In some aspects, the RLC layer feedback report is based at least in part on the decoding attempt.

Process 700 may include additional aspects, such as any single aspect or any combination of aspects described below and/or in connection with one or more other processes described elsewhere herein.

In a first aspect, each of the first plurality of RLC PDU packets includes a plurality of FEC encoded packets. In a second aspect, alone or in combination with the first aspect, the plurality of FEC encoded packets, included in each of the first plurality of RLC PDU packets, are FEC encoded using a rateless network code. In a third aspect, alone or in combination with the first or second aspects, process 700 includes determining that a quantity of the second plurality of RLC PDU packets satisfies a second quantity threshold, wherein transmitting the RLC layer feedback report includes transmitting, to the transmitter, an RLC layer feedback report for the first plurality of RLC PDU packets based at least in part on determining that the quantity of the second plurality of RLC PDU packets satisfies the second quantity threshold.

In a fourth aspect, alone or in combination with one or more of the first through third aspects, the first quantity threshold and the second quantity threshold are indicated in an RLC layer configuration, and the RLC layer configuration is configured at a radio resource control (RRC) layer for the receiver. In a fifth aspect, alone or in combination with one or more of the first through fourth aspects, the RLC layer feedback report includes information identifying an ACK or a NACK for an RLC PDU packet of the first plurality of RLC PDU packets.

In a sixth aspect, alone or in combination with one or more of the first through fifth aspects, the RLC layer feedback report includes information identifying a quantity of failed RLC PDU packets, of the first plurality of RLC PDU packets, for the decoding attempt. In a seventh aspect, alone or in combination with one or more of the first through sixth aspects, the RLC layer feedback report includes information identifying a quantity of failed FEC encoded packets, included in an RLC PDU packet of the first plurality of RLC PDU packets, for the decoding attempt. In a eighth aspect, alone or in combination with one or more of the first through seventh aspects, the RLC layer feedback report includes information identifying an index associated with a failed FEC encoded packet, included in an RLC PDU packet of the first plurality of RLC PDU packets, for the decoding attempt.

In a ninth aspect, alone or in combination with one or more of the first through eighth aspects, the first quantity threshold and the second quantity threshold are correlated and configured together. In a tenth aspect, alone or in combination with one or more of the first through ninth aspects, the second quantity threshold is based at least in part on the second quantity threshold. In an eleventh aspect, alone or in combination with one or more of the first through tenth aspects, the first quantity threshold is based at least in part on a service data unit size for the first plurality of RLC PDU packets. In a twelfth aspect, alone or in combination with one or more of the first through eleventh aspects, the second quantity threshold is 0 RLC PDU packets.

Although Fig. 7 shows example blocks of process 700, in some aspects, process 700 may include additional blocks, fewer blocks, different blocks, or differently arranged blocks than those depicted in Fig. 7. Additionally, or alternatively, two or more of the blocks of process 700 may be performed in parallel.

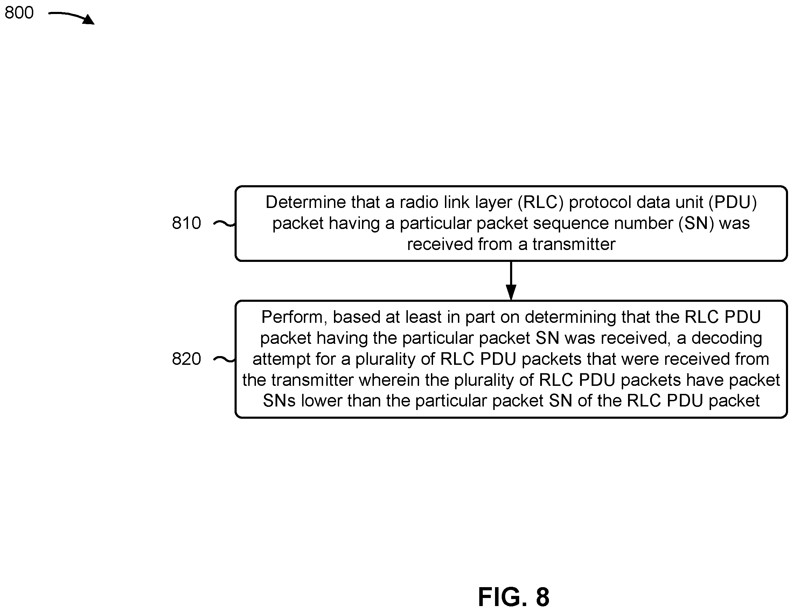

Fig. 8 is a diagram illustrating an example process 800 performed, for example, by a receiver, in accordance with the present disclosure. Example process 800 is an example where the receiver (e.g., a UE 120 or a base station 110) performs operations associated with RLC layer feedback reporting for rateless codes.

As shown in Fig. 8, in some aspects, process 800 may include determining that an RLC PDU packet having a particular packet SN was received from a transmitter (block 810). For example, the receiver (e.g., using transmit processor 200, receive processor 238, controller/processor 240, memory 242, receive processor 258, transmit processor 264, controller/processor 280, memory 282, and/or the like) may determine that an RLC PDU packet having a particular packet SN was received from a transmitter, as described above.

As further shown in Fig. 8, in some aspects, process 800 may include performing, based at least in part on determining that the RLC PDU packet having the particular packet SN was received, a decoding attempt for a plurality of RLC PDU packets that were received from the transmitter, wherein the plurality of RLC PDU packets have packet SNs lower than the particular packet SN of the RLC PDU packet (block 820). For example, the receiver (e.g., using transmit processor 200, receive processor 238, controller/processor 240, memory 242, receive processor 258, transmit processor 264, controller/processor 280, memory 282, and/or the like) may perform, based at least in part on determining that the RLC PDU packet having the particular packet SN was received, a decoding attempt for a plurality of RLC PDU packets that were received from the transmitter, wherein the plurality of RLC PDU packets have packet SNs lower than the particular packet SN of the RLC PDU packet, as described above. In some aspects, the plurality of RLC PDU packets have packet SNs lower than the particular packet SN of the RLC PDU packet.

Process 800 may include additional aspects, such as any single aspect or any combination of aspects described below and/or in connection with one or more other processes described elsewhere herein.

In a first aspect, process 800 includes determining that another RLC PDU packet having another particular packet SN was received from the transmitter, wherein the other RLC PDU packet was received after receiving the RLC PDU packet, and transmitting, to the transmitter, an RLC layer feedback report for the plurality of RLC PDU packets based at least in part on determining that the other RLC PDU packet having the other particular packet SN was received, wherein the RLC layer feedback report is based at least in part on the decoding attempt.

In a second aspect, alone or in combination with the first aspect, process 800 includes determining that a quantity of another plurality of RLC PDU packets, received from the transmitter after receiving the plurality of RLC PDU packets, satisfies a quantity threshold, and transmitting, to the transmitter, an RLC layer feedback report for the plurality of RLC PDU packets based at least in part on determining that the quantity of the other plurality of RLC PDU packets satisfies the quantity threshold, wherein the RLC layer feedback report is based at least in part on the decoding attempt. In a third aspect, alone or in combination with one or more of the first or second aspects, process 800 includes transmitting an RLC layer feedback report to the transmitter prior to receiving a request from the transmitter for the RLC layer feedback report.

Although Fig. 8 shows example blocks of process 800, in some aspects, process 800 may include additional blocks, fewer blocks, different blocks, or differently arranged blocks than those depicted in Fig. 8. Additionally, or alternatively, two or more of the blocks of process 800 may be performed in parallel.

As used herein, the term "component" is intended to be broadly construed as hardware and/or a combination of hardware and software. "Software" shall be construed broadly to mean instructions, instruction sets, code, code segments, program code, programs, subprograms, software modules, applications, software applications, software packages, routines, subroutines, objects, executables, threads of execution, procedures, and/or functions, among other examples, whether referred to as software, firmware, middleware, microcode, hardware description language, or otherwise. As used herein, a processor is implemented in hardware, firmware, and/or a combination of hardware and software. It will be apparent that systems and/or methods described herein may be implemented in different forms of hardware and/or a combination of hardware and software. The actual specialized control hardware or software code used to implement these systems and/or methods is not limiting of the aspects. Thus, the operation and behavior of the systems and/or methods were described herein without reference to specific software code-it being understood that software and hardware can be designed to implement the systems and/or methods based, at least in part, on the description herein.

As used herein, satisfying a threshold may, depending on the context, refer to a value being greater than the threshold, greater than or equal to the threshold, less than the threshold, less than or equal to the threshold, equal to the threshold, not equal to the threshold, or the like.

Even though particular combinations of features are recited in the claims and/or disclosed in the specification, these combinations are not intended to limit the disclosure of various aspects. In fact, many of these features may be combined in ways not specifically recited in the claims and/or disclosed in the specification. Although each dependent claim listed below may directly depend on only one claim, the disclosure of various aspects includes each dependent claim in combination with every other claim in the claim set. As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

No element, act, or instruction used herein should be construed as critical or essential unless explicitly described as such. Also, as used herein, the articles "a" and "an" are intended to include one or more items and may be used interchangeably with "one or more." Further, as used herein, the article "the" is intended to include one or more items referenced in connection with the article "the" and may be used interchangeably with "the one or more." Furthermore, as used herein, the terms "set" and "group" are intended to include one or more items (e.g., related items, unrelated items, or a combination of related and unrelated items), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

## Claims

1. A method of wireless communication performed by a receiver, comprising:
determining that a quantity of a first plurality of radio link control, RLC, layer protocol data unit, PDU, packets, received from a transmitter, satisfies a first quantity threshold (710), wherein each RLC PDU packet includes one or more forward error correction, FEC, encoded packets that are encoded using a rateless network code;
performing a decoding attempt for the first plurality of RLC PDU packets in response to determining that the quantity of the first plurality of RLC PDU packets satisfies the first quantity threshold (720);
receiving a second plurality of RLC PDU packets after the first plurality of RLC PDU packets;
determining that the quantity of the second plurality of RLC PDU packets satisfies a second quantity threshold;
in response to determining that the quantity of the second plurality of RLC PDU packets satisfies the second quantity threshold, transmitting, to the transmitter, an RLC layer feedback report for the first plurality of RLC PDU packets, wherein the RLC layer feedback report is based at least in part on the decoding attempt (730).

2. The method of claim 1, wherein the first quantity threshold and the second quantity threshold are indicated in an RLC layer configuration; and
wherein the RLC layer configuration is configured at a radio resource control, RRC, layer for the receiver.

3. The method of claim 1, wherein the first quantity threshold and the second quantity threshold are correlated and configured together.

4. The method of claim 1, wherein the second quantity threshold is based at least in part on the first quantity threshold.

5. The method of claim 1, wherein the first quantity threshold is based at least in part on a service data unit size for the first plurality of RLC PDU packets.

6. The method of claim 1, wherein the second quantity threshold is 0 RLC PDU packets.

7. The method of claim 1, wherein the RLC layer feedback report includes information identifying an acknowledgement, ACK, or a negative acknowledgement, NACK, for an RLC PDU packet of the first plurality of RLC PDU packets.

8. The method of claim 1, wherein the RLC layer feedback report includes information identifying a quantity of failed RLC PDU packets, of the first plurality of RLC PDU packets, for the decoding attempt.

9. The method of claim 1, wherein the RLC layer feedback report includes information identifying a quantity of failed forward error correction, FEC, encoded packets, included in an RLC PDU packet of the first plurality of RLC PDU packets, for the decoding attempt.

10. The method of claim 1, wherein the RLC layer feedback report includes information identifying an index associated with a failed forward error correction, FEC, encoded packet, included in an RLC PDU packet of the first plurality of RLC PDU packets, for the decoding attempt.

11. An apparatus for wireless communication, comprising:
means for determining that a quantity of a first plurality of radio link control, RLC, layer protocol data unit, PDU, packets, received from a transmitter, satisfies a first quantity threshold (710), wherein each RLC PDU packet includes one or more forward error correction, FEC, encoded packets that are encoded using a rateless network code;
means for performing a decoding attempt for the first plurality of RLC PDU packets in response to determining that the quantity of the first plurality of RLC PDU packets satisfies the first quantity threshold (720); and
means for receiving a second plurality of RLC PDU packets after the first plurality of RLC PDU packets;
means for determining that the quantity of the second plurality of RLC PDU packets satisfies a second quantity threshold;
means for transmitting, in response to determining that the quantity of the second plurality of RLC PDU packets satisfies the second quantity threshold, to the transmitter, an RLC layer feedback report for the first plurality of RLC PDU packets, wherein the RLC layer feedback report is based at least in part on the decoding attempt (730).

## Patentansprüche

1. Verfahren zur drahtlosen Kommunikation, durchgeführt von einem Empfänger, das Folgendes beinhaltet:
Feststellen, dass eine Menge einer ersten Mehrzahl von von einem Sender empfangenen RLC-(Radio Link Control)-PDU-(Protocol Data Unit)-Paketen einen ersten Mengenschwellenwert (710) erfüllt, wobei jedes RLC-PDU-Paket ein oder mehrere FEC-(Forward Error Correction)-encodierte Pakete enthält, die unter Verwendung eines ratenlosen Netwerkcode encodiert sind;
Durchführen eines Decodierungsversuchs für die erste Mehrzahl von RLC-PDU-Paketen als Reaktion auf die Feststellung, dass die Menge der ersten Mehrzahl von RLC-PDU-Paketen den ersten Mengenschwellenwert erfüllt (720);
Empfangen einer zweiten Mehrzahl von RLC-PDU-Paketen nach der ersten Mehrzahl von RLC-PDU-Paketen;
Feststellen, dass die Menge der zweiten Mehrzahl von RLC-PDU-Paketen einen zweiten Mengenschwellenwert erfüllt;
Senden, zu dem Sender, als Reaktion auf die Feststellung, dass die Menge der zweiten Mehrzahl von RLC-PDU-Paketen den zweiten Mengenschwellenwert erfüllt, eines RLC-Schicht-Feedbackberichts für die erste Mehrzahl von RLC-PDU-Paketen, wobei der RLC-Schicht-Feedbackbericht zumindest teilweise auf dem Decodierungsversuch (730) basiert.

2. Verfahren nach Anspruch 1, wobei der erste Mengenschwellenwert und der zweite Mengenschwellenwert in einer RLC-Schichtkonfiguration angegeben sind; und
wobei die RLC-Schichtkonfiguration auf einer RRC-(Radio Resource Control)-Schicht für den Empfänger konfiguriert ist.

3. Verfahren nach Anspruch 1, wobei der erste Mengenschwellenwert und der zweite Mengenschwellenwert korreliert und gemeinsam konfiguriert sind.

4. Verfahren nach Anspruch 1, wobei der zweite Mengenschwellenwert zumindest teilweise auf dem ersten Mengenschwellenwert basiert.

5. Verfahren nach Anspruch 1, wobei der erste Mengenschwellenwert zumindest teilweise auf einer Service-Daten-Einheitsgröße für die erste Mehrzahl von RLC-PDU-Paketen basiert.

6. Verfahren nach Anspruch 1, wobei der zweite Mengenschwellenwert 0 RLC-PDU-Pakete beträgt.

7. Verfahren nach Anspruch 1, wobei der RLC-Schicht-Feedbackbericht Informationen enthält, die eine Bestätigung, ACK, oder eine negative Bestätigung, NACK, für ein RLC-PDU-Paket der ersten Mehrzahl von RLC-PDU-Paketen identifizieren.

8. Verfahren nach Anspruch 1, wobei der RLC-Schicht-Feedbackbericht Informationen enthält, die eine Menge an erfolglosen RLC-PDU-Paketen der ersten Mehrzahl von RLC-PDU-Paketen für den Decodierungsversuch identifizieren.

9. Verfahren nach Anspruch 1, wobei der RLC-Schicht-Feedbackbericht Informationen enthält, die eine Menge an erfolglosen FEC-(Forward Error Correction)-encodierten Paketen identifizieren, die in einem RLC-PDU-Paket der ersten Mehrzahl von RLC-PDU-Paketen für den Decodierungsversuch enthalten sind.

10. Verfahren nach Anspruch 1, wobei der RLC-Schicht-Feedbackbericht Informationen enthält, die einen mit einem erfolglosen FEC-(Forward Error Correction)-encodierten Paket assoziierten Index, enthalten in einem RLC-PDU-Paket der ersten Mehrzahl von RLC-PDU-Paketen, für den Decodierungsversuch identifizieren.

11. Vorrichtung zur drahtlosen Kommunikation, die Folgendes umfasst:
Mittel zum Feststellen, dass eine Menge einer ersten Mehrzahl von von einem Sender empfangenen RLC-(Radio Link Control)-PDU-(Protocol Data Unit)-Paketen einen ersten Mengenschwellenwert (710) erfüllt, wobei jedes RLC-PDU-Paket ein oder mehrere FEC-(Forward Error Correction)-encodierte Pakete enthält, die unter Verwendung eines ratenlosen Netwerkcode encodiert sind;
Mittel zum Durchführen eines Decodierungsversuchs für die erste Mehrzahl von RLC-PDU-Paketen als Reaktion auf die Feststellung, dass die Menge der ersten Mehrzahl von RLC-PDU-Paketen den ersten Mengenschwellenwert erfüllt (720); und
Mittel zum Empfangen einer zweiten Mehrzahl von RLC-PDU-Paketen nach der ersten Mehrzahl von RLC-PDU-Paketen;
Mittel zum Feststellen, dass die Menge der zweiten Mehrzahl von RLC-PDU-Paketen einen zweiten Mengenschwellenwert erfüllt;
Mittel zum Senden, zu dem Sender, als Reaktion auf die Feststellung, dass die Menge der zweiten Mehrzahl von RLC-PDU-Paketen den zweiten Mengenschwellenwert erfüllt, eines RLC-Schicht-Feedbackberichts für die erste Mehrzahl von RLC-PDU-Paketen, wobei der RLC-Schicht-Feedbackbericht zumindest teilweise auf dem Decodierungsversuch (730) basiert.

## Revendications

1. Procédé de communication sans fil réalisé par un récepteur, comprenant :
la détermination qu'une quantité d'une première pluralité de paquets d'unités de données de protocole, PDU, de commande de liaison radio, RLC, reçue depuis un émetteur, satisfait un premier seuil de quantité (710), dans lequel chaque paquet PDU RLC comporte un ou plusieurs paquets encodés de correction d'erreurs sans voie de retour, FEC, qui sont encodés à l'aide d'un code de réseau sans rendement ;
la réalisation d'une tentative de décodage de la première pluralité de paquets PDU RLC en réponse à la détermination que la quantité de la première pluralité de paquets PDU RLC satisfait le premier seuil de quantité (720) ;
la réception d'une seconde pluralité de paquets PDU RLC après la première pluralité de paquets PDU RLC ;
la détermination que la quantité de la seconde pluralité de paquets PDU RLC satisfait un second seuil de quantité ;
en réponse à la détermination que la quantité de la seconde pluralité de paquets PDU RLC satisfait le second seuil de quantité, la transmission à l'émetteur, d'un rapport de retour d'information de couche RLC pour la première pluralité de paquets PDU RLC, dans lequel le rapport de retour d'information de couche RLC est basé au moins en partie sur la tentative de décodage (730).

2. Procédé selon la revendication 1, dans lequel le premier seuil de quantité et le second seuil de quantité sont indiqués dans une configuration de couche RLC ; et
dans lequel la configuration de couche RLC est configurée au niveau d'une couche de commande de ressources radio, RRC, pour le récepteur.

3. Procédé selon la revendication 1, dans lequel le premier seuil de quantité et le second seuil de quantité sont corrélés et configurés ensemble.

4. Procédé selon la revendication 1, dans lequel le second seuil de quantité est basé au moins en partie sur le premier seuil de quantité.

5. Procédé selon la revendication 1, dans lequel le premier seuil de quantité est basé au moins en partie sur une taille d'unité de données de service pour la première pluralité de paquets PDU RLC.

6. Procédé selon la revendication 1, dans lequel le second seuil de quantité est 0 paquet PDU RLC.

7. Procédé selon la revendication 1, dans lequel le rapport de retour d'information de couche RLC comporte des informations identifiant un accusé de réception, ACK, ou un accusé de réception négatif, NACK, d'un paquet PDU RLC de la première pluralité de paquets PDU RLC.

8. Procédé selon la revendication 1, dans lequel le rapport de retour d'information de couche RLC comporte des informations identifiant une quantité de paquets PDU RLC défaillants, de la première pluralité de paquets PDU RLC, de la tentative de décodage.

9. Procédé selon la revendication 1, dans lequel le rapport de retour d'information de couche RLC comporte des informations identifiant une quantité de paquets encodés de correction d'erreurs sans voie de retour, FEC, défaillants, inclus dans un paquet PDU RLC de la première pluralité de paquets PDU RLC, de la tentative de décodage.

10. Procédé selon la revendication 1, dans lequel le rapport de retour d'information de couche RLC comporte des informations identifiant un indice associé à un paquet encodé de correction d'erreurs sans voie de retour, FEC, inclus dans un paquet PDU RLC de la première pluralité de paquets PDU RLC, de la tentative de décodage.

11. Appareil de communication sans fil, comprenant :
un moyen de détermination qu'une quantité d'une première pluralité de paquets d'unités de données de protocole, PDU, de commande de liaison radio, RLC, reçue depuis un émetteur, satisfait un premier seuil de quantité (710), dans lequel chaque paquet PDU RLC comporte un ou plusieurs paquets encodés de correction d'erreurs sans voie de retour, FEC, qui sont encodés à l'aide d'un code de réseau sans rendement ;
un moyen de réalisation d'une tentative de décodage de la première pluralité de paquets PDU RLC en réponse à la détermination que la quantité de la première pluralité de paquets PDU RLC satisfait le premier seuil de quantité (720) ; et
un moyen de réception d'une seconde pluralité de paquets PDU RLC après la première pluralité de paquets PDU RLC ;
un moyen de détermination que la quantité de la seconde pluralité de paquets PDU RLC satisfait un second seuil de quantité ;
un moyen de transmission, en réponse à la détermination que la quantité de la seconde pluralité de paquets PDU RLC satisfait le second seuil de quantité, à l'émetteur, d'un rapport de retour d'information de couche RLC pour la première pluralité de paquets PDU RLC, dans lequel le rapport de retour d'information de couche RLC est basé au moins en partie sur la tentative de décodage (730).
